# EUROPEAN PATENT APPLICATION

(11) **EP 4 297 172 A1**
(43) Date of publication of application: **27.12.2023**
(21) Application number: 22756560.3
(22) Date of filing: 18.02.2022
(51) Int. Cl.: H01M 50/531, H01M 50/528, B21D 35/00, B21K 23/00, B21H 7/00, H01M 50/538, B23K 101/38

(54) **SECONDARY BATTERY, AND BATTERY PACK AND VEHICLE COMPRISING SAME**

(30) Priority: 19.02.2021 KR 20210022869
(71) Applicant: LG Energy Solution, Ltd., Seoul 07335 (KR)
(72) Inventor: CHOI, Suji, Daejeon 34122 (KR); HWANG BO, Kwang Su, Daejeon 34122 (KR); MIN, Geon Woo, Daejeon 34122 (KR); JO, Minki, Daejeon 34122 (KR)
(74) Representative: Goddar, Heinz J.
(86) International application number: PCT/KR2022/002446
(87) International publication number: WO 2022/177362

(57) **Abstract**

The present specification provides a secondary battery, a battery pack, and a vehicle including the same, the secondary battery including an electrode assembly in which first and second electrodes and a separator provided between the first and second electrodes are wound, the first and second electrodes each including a non-coated portion of the first electrode disposed at a long side end thereof, exposed to the outside of the separator, and having no active material applied thereonto, and a current collecting plate provided at one end of the electrode assembly at which the non-coated portion of the first electrode is exposed, the current collecting plate including a central portion corresponding to a core of the electrode assembly, in which the central portion includes a first welding portion having a thickness smaller than a thickness of the remaining portion of the current collecting plate.

## Description

### [Technical Field]

This application claims priority to and the benefit of Korean Patent Application No. 10-2021-0022869 filed with the Korean Intellectual Property Office on February 19, 2021, the entire contents of which are incorporated herein by reference.

The present invention relates to a secondary battery, a battery pack, and a vehicle.

### [Background Art]

A secondary battery is easy to apply to product groups and has high electrical characteristics such as high energy density. Therefore, the secondary battery is widely applied not only to portable devices but also to electric vehicles (EVs) or hybrid electric vehicles (HEVs) driven by electrical driving sources.

The secondary battery attracts attention as a new energy source for improving environmental-friendly characteristics and energy efficiency because the secondary battery achieves a primary advantage of innovatively reducing the use of fossil fuel and does not generate any by-products from the use of energy.

Types of secondary batteries currently used widely include a lithium-ion battery, a lithium-polymer battery, a nickel-cadmium battery, a nickel-hydrogen battery, a nickel-zinc battery, and the like. An operating voltage of a unit secondary battery cell is about 2.5 V to 4.5 V. Therefore, when an output voltage higher than the operating voltage is required, a plurality of batteries is connected in series and constitutes a battery pack. In addition, the plurality of batteries is connected in parallel and constitutes the battery pack depending on a charge/discharge capacity required for the battery pack. Therefore, the number of batteries included in the battery pack and the type of electrical connection between the batteries may be variously set depending on required output voltages and/or charge/discharge capacities.

Meanwhile, cylindrical batteries, angular batteries, and pouch batteries are known as the types of secondary battery cells. The cylindrical battery is made by interposing a separator, which is an insulator, between a positive electrode and a negative electrode, winding the assembly of the separator, the positive electrode, and the negative electrode to form an electrode assembly in the form of a jelly roll, and inserting the electrode assembly together with an electrolyte into a battery can. For reference, a positive electrode terminal is a cap of a sealing body configured to seal an opening port of the battery can, and a negative electrode terminal is a battery can.

However, in the process of performing welding to couple the electrode assembly and the current collecting plate, a defect may occur because of deformation of the current collecting plate caused by pressure applied by a welding jig and deformation of the current collecting plate caused by external force applied during the assembly process.

Such a bending defect may cause damage to a welding region of the current collecting plate or damage to insulating components, which may cause an increase in risk of defect of the battery cell and a deterioration in safety due to unnecessary electrical contact.

### [Detailed Description of the Invention]

### [Technical Problem]

An object of the present invention is to ensure welding efficiency and structural rigidity in a process of welding a current collector and an electrode structure by relatively reducing a thickness of a welding portion of a current collecting plate.

### [Technical Solution]

The present specification provides a secondary battery including: an electrode assembly in which first and second electrodes and a separator provided between the first and second electrodes are wound, the first and second electrodes each including a non-coated portion of the first electrode disposed at a long side end thereof, exposed to an outside of the separator, and having no active material applied thereto; and a current collecting plate provided at one end of the electrode assembly at which the non-coated portion of the first electrode is exposed, the current collecting plate including a central portion corresponding to a core of the electrode assembly, in which the central portion includes a first welding portion having a thickness smaller than a thickness of a remaining portion of the current collecting plate.

In the embodiment of the present specification, the current collecting plate may further include two or more legs, each leg having one end connected to the central portion and extending from the central portion in an outer peripheral direction of the electrode assembly, and each leg may include a second welding portion having a thickness smaller than a thickness of the remaining portion of the current collecting plate except for the first welding portion.

In the embodiment of the present specification, the thickness of the first welding portion may gradually decreases in a direction from outside to inside the first welding portion.

In the embodiment of the present specification, a ratio between an average thickness of the first welding portion and the thickness of the remaining portion of the current collecting plate may be 0.4:1 to 0.9:1.

In the embodiment of the present specification, an average thickness of the first welding portion may be 0.05 cm or more and 0.5 cm or less.

In the embodiment of the present specification, a ratio between an average thickness of the second welding portion and the thickness of the remaining portion of the current collecting plate except for the first welding portion may be 0.4:1 to 0.9:1.

In the embodiment of the present specification, an average thickness of the second welding portion may be 0.05 cm or more and 0.5 cm or less.

In the embodiment of the present specification, the second welding portions respectively included in the two or more legs may have a same sized area.

In the embodiment of the present specification, the current collecting plate may further include four legs, each leg having one end connected to the central portion and extending from the central portion in an outer peripheral direction of the electrode assembly, and the four legs may be positioned to be spaced apart from one another in a winding direction of the electrode assembly.

In the embodiment of the present specification, the first welding portion may be positioned to be spaced apart from an outer peripheral line of the current collecting plate.

In the embodiment of the present specification, the second welding portion may be positioned to be spaced apart from an outer peripheral line of the current collecting plate.

In the embodiment of the present specification, the first and second welding portions may be positioned to be spaced apart from each other.

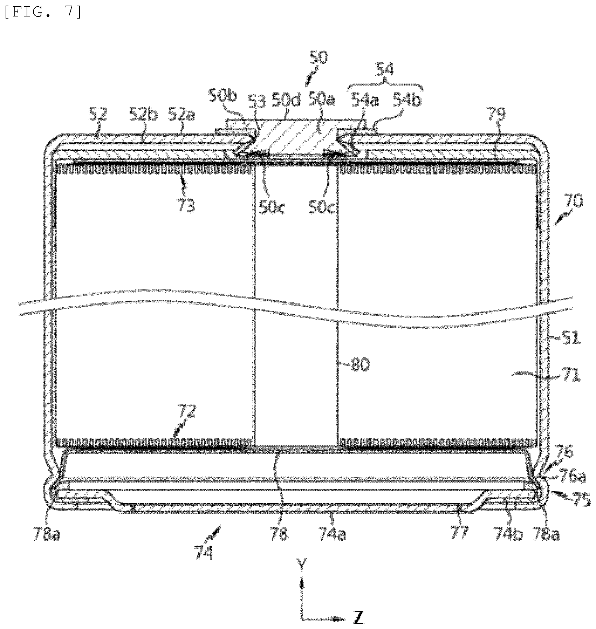

In the embodiment of the present specification, the secondary battery may further include: a battery can configured to accommodate the electrode assembly, the battery can including an opening portion; a cap plate configured to seal the opening portion of the battery can; and an electrode terminal coupled to the first welding portion of the current collecting plate by welding, the electrode terminal may be riveted to the battery can. FIG. 7 illustrates an internal structure of the secondary battery including the battery can, the cap plate, and the electrode terminal.

The present specification provides a current collecting plate for a secondary battery having an electrode assembly made by stacking and winding a first electrode, a separator, and a second electrode, the first electrode including a first electrode current collector and an electrode active material layer provided on the first electrode current collector, wherein a non-coated portion of the first electrode, on which the electrode active material layer is not provided, is provided at a long side end based on a winding direction of the current collector, the current collecting plate may include a central portion corresponding to a core of the electrode assembly, the central portion including a first welding portion having a smaller thickness than the remaining portion of the current collecting plate.

The present specification provides a battery pack including a plurality of secondary batteries described above.

The present specification provides a vehicle including at least one battery pack described above.

### [Advantageous Effects]

It is possible to ensure excellent welding efficiency and structural rigidity in the process of welding the current collector and the electrode structure by applying the current collecting plate according to the embodiment of the present invention to manufacture the secondary battery.

### [Brief Description of Drawings]

FIG. 1 is a top plan view illustrating a structure of a plate-shaped electrode according to an embodiment of the present specification before the electrode is wound.
FIG. 2 is a view illustrating a process of winding an electrode assembly according to the embodiment of the present specification.
FIG. 3 is an assembled view illustrating a process in which current collecting plates are provided at two opposite ends of a non-coated portion after the electrode assembly illustrated in FIG. 2 is wound.
FIG. 4 is a cross-sectional view taken in a longitudinal direction Y and illustrating a secondary battery according to the embodiment of the present specification.
FIG. 5 is a cross-sectional view illustrating a riveting structure of an electrode terminal according to another embodiment of the present specification.
FIG. 6 is a cross-sectional view of a part indicated by the dash-dotted circle B in FIG. 5.
FIG. 7 is a cross-sectional view taken in the longitudinal direction Y and illustrating a secondary battery according to another embodiment of the present specification.
FIG. 8 is a view illustrating parts of the current collecting plate according to the embodiment of the present specification corresponding to a central portion, legs, and a first welding portion.
FIG. 9 is a top plan view of a current collecting plate in the related art and a cross-sectional view taken along line c-c'.
FIG. 10 is a view illustrating parts of a current collecting plate according to another embodiment of the present specification corresponding to a central portion, legs, a first welding portion, and a second welding portion.
FIG. 11 is a top plan view exemplarily illustrating a structure of a plate-shaped electrode according to another embodiment of the present specification before the plate-shaped electrode is wound.
FIG. 12 is a cross-sectional view taken in the longitudinal direction Y and illustrating an electrode assembly according to another embodiment of the present specification in which a segmental structure of a non-coated portion of the electrode is applied to first and second electrodes.

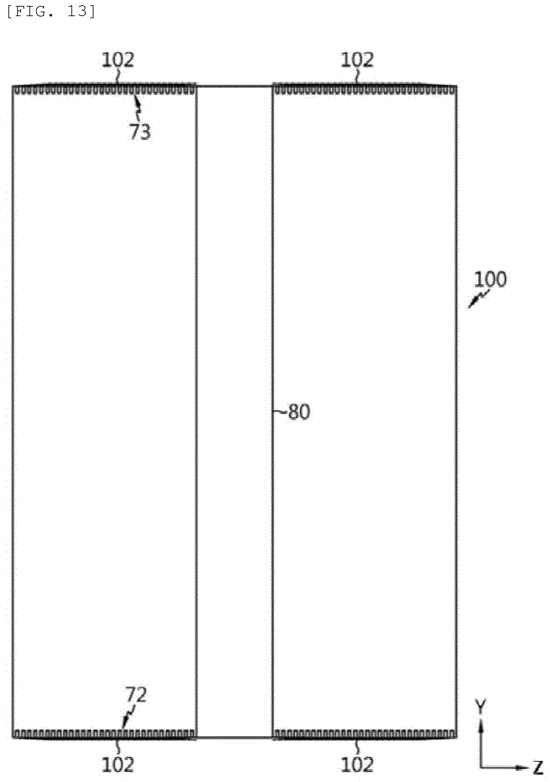

FIG. 13 is a cross-sectional view taken in the longitudinal direction Y and illustrating an electrode assembly according to another embodiment of the present specification in which a non-coated portion is bent.
FIG. 14 is a view illustrating a schematic configuration of a battery pack including cylindrical battery cells according to the embodiment of the present specification.
FIG. 15 is a view illustrating a schematic configuration of a vehicle including the battery pack according to the embodiment of the present specification.

### [Explanation of Reference Symbols]

10: First electrode
10a: Non-coated portion of first electrode
11: Second electrode
11a: Non-coated portion of second electrode
12: Separator
30, 31: Current collecting plate
71, A, 100: Electrode assembly
Y: Longitudinal direction
X: Winding direction
Z: Outer peripheral direction
40, 70: Secondary battery
41, 51: Battery can
42, 74: Sealing body
42a, 74a: Cap plate
42b, 74b: Sealing gasket
42c: Connection plate
43, 75: Crimping portion
44, 76: Beading portion
45: Lead
46: Insulator
50: Electrode terminal
50a: Body portion
50b: Outer flange portion
50c: Inner flange portion
50d: Flat portion
52: Bottom of battery can
52a: Outer surface of bottom of battery can
52b: Inner surface of bottom of battery can
53: Through-hole
54: Riveting gasket
54a: Outer gasket
54b: Inner gasket
55: Recessed portion
55a: Sidewall of flat portion
55b: Inclined surface of inner flange portion
56: Inner edge of through-hole
57: Facing surface facing inner flange portion
H1: Height of flat portion
H2: Height of end of inner gasket
H3: Height of end of inner flange portion
R1: Radius from center of body portion to edge of outer flange portion
R2: Radius of bottom of battery can
R3: Radius from center of body portion to edge of flat portion
72: Non-coated portion of second electrode
73: Non-coated portion of first electrode
76a: Inner peripheral surface of beading portion
77: Vent notch
78: Second current collecting plate
78a: At least part of edge not being in contact with non-coated portion of second electrode
79: First current collecting plate
80: Cavity
90: Electrode
91: Current collector
92: Active material layer
93: Non-coated portion
93': Core side non-coated portion
93a: Segmental piece
h: Height of segmental piece
r: Radial length of winding region defined by core side non-coated portion
94: Insulating coating layer
101: Bent portion
102: Bent surface
200: Battery pack
201: Cylindrical battery cell
202: Pack housing
V: Vehicle
340: Core
400: Current collecting plate
410: Central portion
411: First welding portion
420: Peripheral portion
430: Leg
431: Second welding portion

### [Best Mode]

Hereinafter, the present specification will be described in more detail.

Hereinafter, exemplary embodiments of the present invention will be described in detail with reference to the accompanying drawings. In addition, terms or words used in the specification and the claims should not be interpreted as being limited to a general or dictionary meaning and should be interpreted as a meaning and a concept which conform to the technical spirit of the present invention based on a principle that an inventor can appropriately define a concept of a term in order to describe his/her own invention by the best method. Therefore, the exemplary embodiments disclosed in the present specification and the configurations illustrated in the drawings are just the best preferred exemplary embodiments of the present invention and do not represent all the technical spirit of the present invention. Accordingly, it should be appreciated that various equivalents and modified examples capable of substituting the exemplary embodiments may be made at the time of filing the present application.

In addition, to help understand the present invention, the accompanying drawings are not illustrated based on actual scales, but some constituent elements may be exaggerated in dimension. In addition, the constituent elements in different embodiments may be assigned with the same reference numerals.

The expression indicating that the two comparison targets are equal to each other means that the two comparison targets are 'substantially' equal to each other. Therefore, the substantial equality may include a case in which a deviation considered as being at a low level in the art is present, for example, a deviation within 5% is present. In addition, a configuration in which a particular parameter is constant in a predetermined region may mean that the parameter is constant from an average point of view.

In the present specification, the term "on" not only means that a layer is positioned on one layer while being in physical contact with the layer but also means that a layer is positioned above one layer. That is, still another layer may be present between one layer and another layer positioned on one layer.

In the specification, unless explicitly described to the contrary, the word "comprise" or "include" and variations, such as "comprises", "comprising", "includes" or "including", will be understood to imply the inclusion of stated constituent elements, not the exclusion of any other constituent elements.

A secondary battery 40 or 70 according to an embodiment of the present specification includes an electrode assembly 71, A, or 100 and a current collecting plate 400.

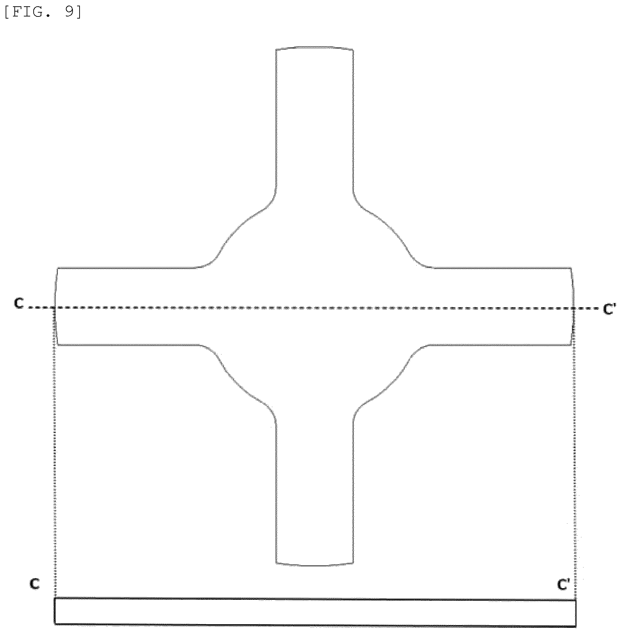

FIG. 9 is a top plan view of a current collecting plate used in the related art and a cross-sectional view taken along line c-c'. As illustrated in FIG. 9, in the related art, during a process of welding a current collecting plate and a non-coated portion of an electrode assembly, the current collecting plate having all the parts, i.e., even the welded parts having a constant and small thickness is used to improve welding efficiency. However, there is a problem in that the current collecting plate is deformed by pressure applied by a welding jig. Further, it was ascertained that the deformation of the current collecting plate causes a risk of damage to insulating components in a secondary battery.

To solve the above-mentioned problem, a central portion 410 of the current collecting plate 400 includes a first welding portion 411 having a thickness smaller than a thickness h2 of the remaining portion. The welding may be performed without damage through the thin first welding portion 411, and the strength may be ensured through the remaining portion having the thickness h2 larger than a thickness h1 of the first welding portion 411.

The secondary battery 40 or 70 according to the embodiment of the present specification includes: the electrode assembly 71, A, or 100 in which first and second electrodes 10 and 11 and a separator 12 provided between the first and second electrodes 10 and 11 are wound, the first and second electrodes 10 and 11 each including a non-coated portion 10a of the first electrode 10 disposed at a long side end thereof, exposed to the outside of the separator 12, and having no active material applied thereto; and the current collecting plate 400 disposed at one end of the electrode assembly 71, A, or 100 at which the non-coated portion 10a of the first electrode 10 is exposed, the current collecting plate 400 including the central portion 410 corresponding to a core 340 of the electrode assembly 71, A, or 100, in which the central portion 410 includes a first welding portion 411 having a thickness smaller than the thickness h2 of the remaining portion of the current collecting plate 400.

The secondary battery 40 or 70 according to the embodiment of the present specification includes: the electrode assembly 71, A, or 100 in which the first electrode 10, the separator 12, and the second electrode 11 are stacked and wound, the first electrode 10 including a first electrode current collector (not illustrated) and an electrode active material layer (not illustrated) provided on the first electrode current collector (not illustrated), in which a long side end of the first electrode current collector (not illustrated) based on a winding direction X includes a non-coated portion 10a of the first electrode 10 that does not have the electrode active material layer (not illustrated); and the current collecting plate 400 provided at one end of the electrode assembly 71, A, or 100 at which the non-coated portion 10a of the first electrode 10 is exposed, the current collecting plate 400 including the central portion 410 corresponding to the core 340 of the electrode assembly 71, A, or 100. The central portion 410 of the current collecting plate 400 includes the first welding portion 411 having the thickness smaller than the thickness h2 of the remaining portion of the current collecting plate.

In the embodiment of the present specification, the current collecting plate 400 may include the central portion 410 including the first welding portion 411 and a peripheral portion 420 separated from the central portion 410. In the peripheral portion 420, the entire edge of the central portion 410 may extend in the direction Z toward the outer periphery of the electrode assembly 71, A, or 100. The current collecting plate 400 having the above-mentioned shape may have a circular plate shape, an elliptical shape, or the like.

In another embodiment of the present specification, the current collecting plate 400 may include one or more legs 430 extending from a part of the edge of the central portion 410 in the direction Z toward the outer periphery of the electrode assembly 71, A, or 100.

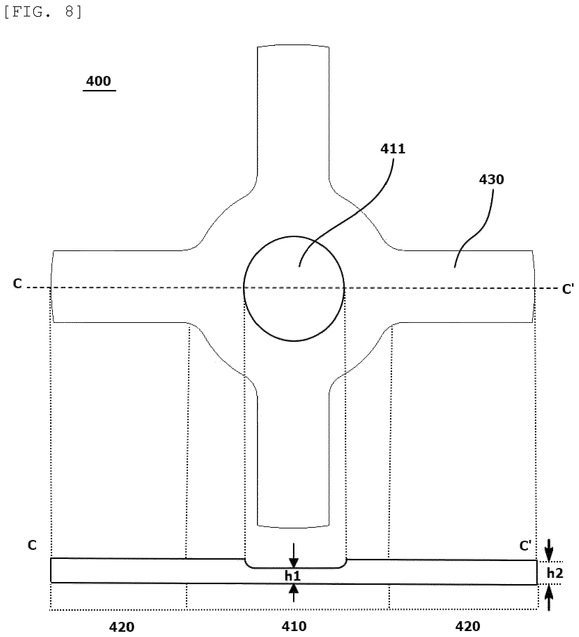

In the embodiment of the present specification, the current collecting plate 400 may further include two or more legs 430 each having one end connected to the central portion 410 and extending from the central portion 410 in an outer peripheral direction Z of the electrode assembly 71, A, or 100. FIG. 8 illustrates the current collecting plate 400 according to the embodiment of the present specification that includes the central portion 410 including the first welding portion 411, and the legs 430 provided on the peripheral portion 420.

That is, the current collecting plate 400 according to the embodiment of the present specification has a welding region having a relatively small thickness, thereby solving the problem of deformation of the current collecting plate 400 caused by pressure applied by the welding jig. FIG. 8 illustrates that the first welding portion 411 of the current collecting plate, which is to be welded, has the relatively small thickness h1.

In another embodiment of the present specification, the current collecting plate 400 may further include three or more legs 430 each having one end connected to the central portion 410 and extending from the central portion 410 in the outer peripheral direction of the electrode assembly. The leg 430 may include a second welding portion 431 having a thickness smaller than the thickness h2 of the remaining portion except for the first welding portion 411 of the current collecting plate 400.

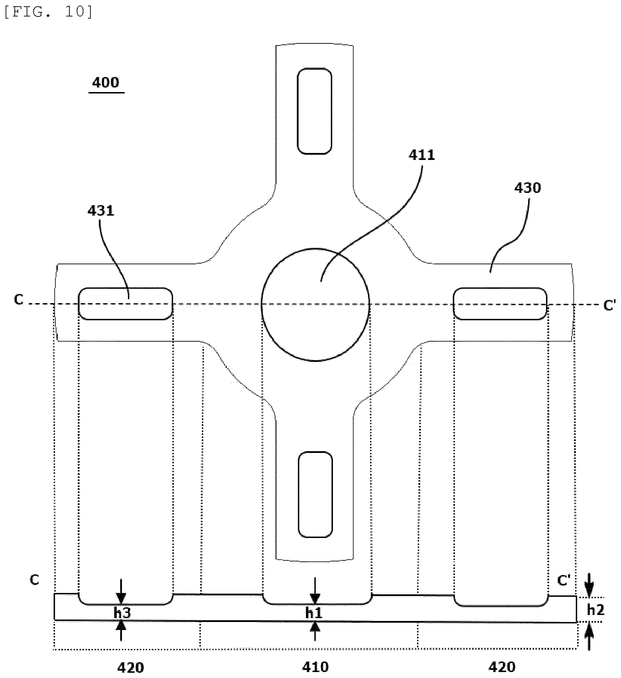

In still another embodiment of the present specification, the current collecting plate 400 may further include four or more legs 430 each having one end connected to the central portion 410 and extending from the central portion 410 in the outer peripheral direction of the electrode assembly. The leg 430 may include the second welding portion 431 having the thickness smaller than the thickness h2 of the remaining portion except for the first welding portion 411 of the current collecting plate 400. FIG. 10 illustrates the current collecting plate 400 according to the embodiment of the present specification that includes the central portion 410 including the first welding portion 411, and the leg 430 provided on the peripheral portion 420 and having the second welding portion 431.

In the embodiment of the present specification, the current collecting plate 400 may further include the four legs 430 each having one end connected to the central portion 410 and extending from the central portion 410 in the outer peripheral direction Z of the electrode assembly 71, A, or 100. The four legs 430 are positioned to be spaced apart from one another in the winding direction X of the electrode assembly 71, A, or 100. FIGS. 8 and 10 illustrate the shape of the current collecting plate 400 including the four legs 430.

A method of forming the first and second welding portions 411 and 431 on the current collecting plate 400 may use pressure. Specifically, the first and second welding portions 411 and 431 may be formed by a forging technology. The forging technology means a method of deforming a material by applying an external force to heated metal.

In another embodiment of the present specification, the first welding portion 411 may have a structure having a thickness that gradually decreases in a direction from outside to inside the first welding portion 411.

In the embodiment of the present specification, a ratio between the average thickness h1 of the first welding portion 411 and the thickness h2 of the current collecting plate 400 except for the first welding portion 411 may be 1: 1.2 to 1:1.8.

In the embodiment of the present specification, the ratio between the average thickness h1 of the first welding portion 411 and the thickness h2 of the current collecting plate except for the first welding portion 411 may be 0.4:1 to 0.9:1. The ratio between the average thickness h1 of the first welding portion 411 and the thickness h2 of the current collecting plate 400 except for the first welding portion 411 may be 0.4:1, 0.5:1, 0.6:1, 0.7:1, 0.8:1, or 0.9:1.

In the embodiment of the present specification, the average thickness h1 of the first welding portion 411 may be 40% or more, 50% or more, 60% or more, 70% or more, 80% or more, or 90% or less, 89% or less, 87% or less, 86% or less, 85% or less, 84% or less, 83% or less, 82% or less, or 810 or less of the thickness h2 of the current collecting plate 400 except for the first welding portion 411.

When the thickness ratio is satisfied, the current collecting plate 400 in the region having a relatively large thickness may have an appropriate thickness for ensuring rigidity, which makes it possible to prevent deformation of the current collecting plate 400 caused by pressure of the welding jig and improve welding efficiency.

In the embodiment of the present specification, the average thickness h1 of the first welding portion 411 may be 0.05 cm or more and 0.5 cm or less, 0.08 cm or more and 0.45 cm or less, or 0.2 cm or more and 0.4 cm or less. When the thickness is satisfied, it is possible to obtain excellent welding efficiency during the process of welding the electrode assembly 71, A, or 100 and the current collecting plate 400.

In the embodiment of the present specification, a ratio between an average thickness h3 of the second welding portion 431 and the thickness h2 of the current collecting plate 400 except for the first and second welding portions 411 and 431 may be 1: 1.2 to 1:1.8.

In the embodiment of the present specification, the ratio between the average thickness h3 of the second welding portion 431 and the thickness h2 of the current collecting plate 400 except for the first and second welding portions 411 and 431 may be 0.4:1 to 0.9:1. The ratio between the average thickness h3 of the second welding portion 431 and the thickness h2 of the current collecting plate 400 except for the first and second welding portions 411 and 431 may be 0.4:1, 0.5:1, 0.6:1, 0.7:1, 0.8:1, or 0.9:1.

The average thickness h3 of the second welding portion 431 may be 40% or more, 50% or more, 60% or more, 70% or more, 80% or more, or 90% or less, 89% or less, 87% or less, 86% or less, 85% or less, 84% or less, 83% or less, 82% or less, or 810 or less of the thickness h2 of the current collecting plate 400 except for the first and second welding portions 411 and 431.

When the thickness ratio is satisfied, the current collecting plate 400 in the region having a relatively large thickness may have an appropriate thickness for ensuring rigidity, which makes it possible to prevent deformation of the current collecting plate 400 caused by pressure of the welding jig and improve welding efficiency.

In the embodiment of the present specification, the average thickness h3 of the second welding portion 431 may be 0.05 cm or more and 0.5 cm or less, 0.08 cm or more and 0.45 cm or less, or 0.2 cm or more and 0.4 cm or less. When the thickness is satisfied, it is possible to obtain excellent welding efficiency during the process of welding the electrode assembly 71, A, or 100 and the current collecting plate 400.

In the embodiment of the present specification, the second welding portions 431 respectively included in the two or more legs 430 may have the same area.

In the embodiment of the present specification, the first welding portion 411 may be positioned to be spaced apart from the edge of the current collecting plate.

In the embodiment of the present specification, an area of the first welding portion 411 may be smaller than an area of the central portion 410 of the current collecting plate.

In the embodiment of the present specification, the second welding portion 431 may be positioned to be spaced apart from the edge of the current collecting plate 400.

In the embodiment of the present specification, an area of the second welding portion 431 may be smaller than an area of the leg 430.

In the embodiment of the present specification, the first and second welding portions 411 and 431 may be positioned to be spaced apart from one another.

In the embodiment of the present specification, the second welding portion 431 means a portion to be welded to the non-coated portion 10a of the first electrode 10.

In the embodiment of the present specification, the first welding portion 411 means a portion to be welded to an electrode terminal 50 to be described below.

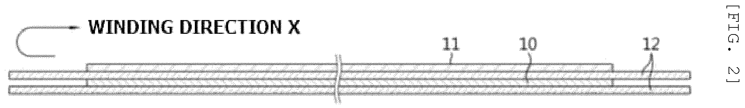

For example, the electrode assembly 71, A, or 100 according to the embodiment of the present specification may have a jelly-roll structure. The electrode assembly 71, A, or 100 may be manufactured by interposing a separator 12 between the first and second electrodes 10 and 11 having the sheet shape, stacking the separator and the first and second electrodes at least once to form a stack, and winding the stack around a winding central portion, as illustrated in FIG. 2. That is, the positive and negative electrodes each have a structure in which an active material layer 92 is provided by coating a current collector 91 having a sheet shape with an active material. The first and second electrodes 10 and 11 may each include a non-coated portion 93 disposed at one long side thereof based on the winding direction. In this case, an additional separator may be provided on an outer peripheral surface of the electrode assembly 71 to implement insulation from the battery can 51. The jelly-roll structure known in the art may be applied to the present invention without limitation.

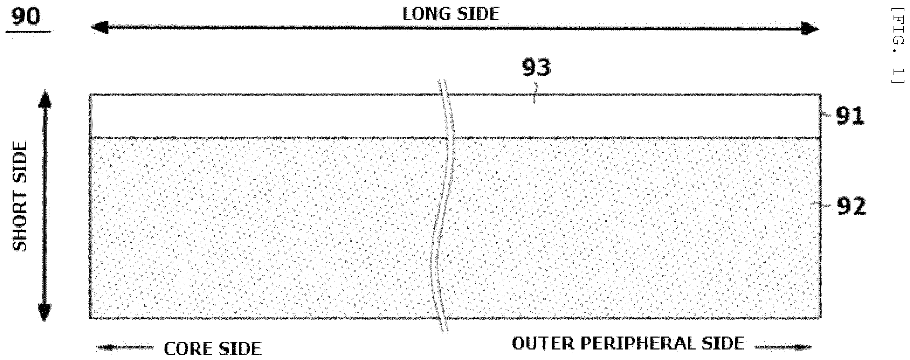

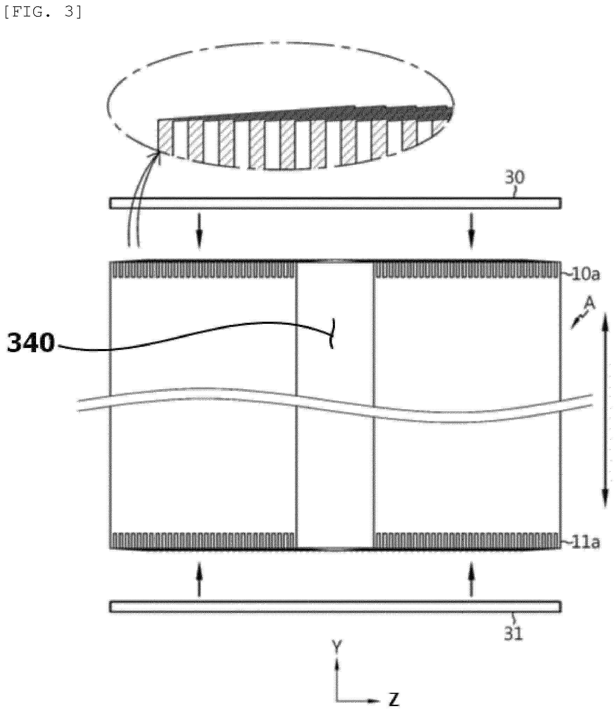

FIG. 1 illustrates a structure of the current collector according to the embodiment of the present specification, FIG. 2 illustrates a process of winding the current collector according to the embodiment of the present specification, and FIG. 3 illustrates a process of welding the current collecting plate to the bent surface of the non-coated portion according to the embodiment of the present specification.

In the embodiment of the present specification, the current collecting plate may further include an electrode tab. In the case in which the electrode tab is provided, the electrode tab is connected by being bent to conform to the structure of the battery cell at the time of assembling the battery cell.

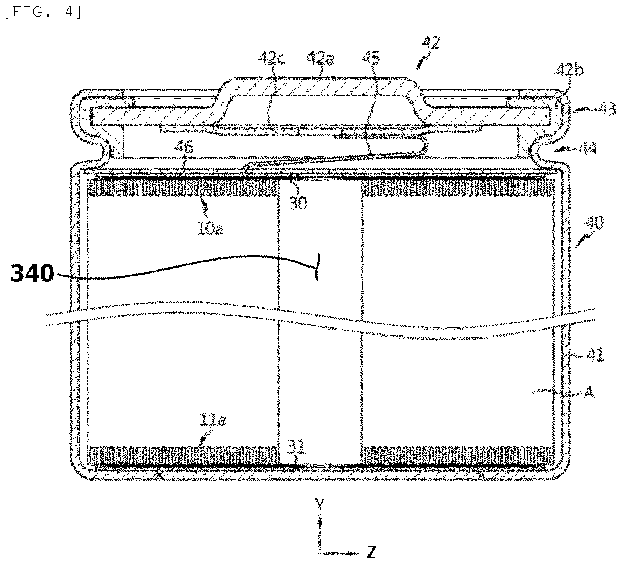

FIG. 4 illustrates a structure in which a lead having a strip shape is used when the current collecting plate and the electrode terminal are connected to each other in the secondary battery.

Referring to FIGS. 1 to 4, the first and second electrodes 10 and 11 each have a structure in which the current collector 91 having a sheet shape is coated with the active material 92. The first and second electrodes 10 and 11 may each include the non-coated portion 93 disposed at one long side thereof based on the winding direction.

The electrode assembly is manufactured by sequentially stacking the first and second electrodes 10 and 11 together with two sheets of separators 12 to form a stack, as illustrated in FIG. 2, and then winding the stack in one direction X. In this case, the non-coated portions of the first and second electrodes 10 and 11 may be disposed in opposite directions. After the winding process, the non-coated portion 10a of the first electrode 10 and the non-coated portion 11a of the second electrode 11 are bent toward the core. Thereafter, the current collecting plates 30 and 31 are respectively coupled to the non-coated portions 10a and 11a by welding.

The separate electrode tab is not coupled to the non-coated portion 10a of the first electrode and the non-coated portion 11a of the second electrode, and the current collecting plates 30 and 31 are connected to the external electrode terminals. Therefore, a current path having a large cross-sectional area is formed in the direction of the winding axis of the electrode assembly A (see the arrow), thereby reducing the resistance of the battery cell. This is because the resistance is inversely proportional to a cross-sectional area of a passageway through which current flows.

As illustrated in FIG. 4, the secondary battery 42 according to the embodiment of the present specification includes a battery can 41 and a sealing body 42. The sealing body 42 includes a cap plate 42a, a sealing gasket 42b, and a connection plate 42c. The sealing gasket 42b surrounds an edge of the cap plate 42a and is fixed by a crimping portion 43. In addition, the electrode assembly A is fixed in the battery can 41 by a beading portion 44 so that the electrode assembly A is prevented from moving upward or downward.

Typically, the positive electrode terminal is the cap plate 42a of the sealing body 42, and the negative electrode terminal is the battery can 41. Therefore, the current collecting plate 30 coupled to the non-coated portion 10a of the first electrode 10 is electrically connected to the connection plate 42c attached to the cap plate 42a through the lead 45 having a strip shape. In addition, the current collecting plate 31 coupled to the non-coated portion 11a of the second electrode 11 is electrically connected to a bottom of the battery can 41. The insulator 46 covers the current collecting plate 30 and prevents a short circuit caused by contact between the battery can 41 and the non-coated portion 10a of the first electrode 10 that have different polarities.

Referring to FIG. 4, the lead 45 having a strip shape is used to connect the current collecting plate 30 or 31 to the connection plate 42c. The lead 45 is separately attached to the current collecting plate 30 or manufactured integrally with the current collecting plate 30. However, since the lead 45 has a strip shape having a small thickness and thus has a small cross-sectional area, a large amount of heat is generated when high-speed charging current flows. In addition, an excessive amount of heat generated by the lead 45 is transferred to the electrode assembly A and contracts the separator (not illustrated), which may cause an internal short circuit which is a main cause of thermal runaway. The lead 45 occupies a significantly large installation space in the battery can 41. Therefore, the secondary battery 40 including the lead 45 has low spatial efficiency and thus has a limitation in increasing energy density.

In the embodiment of the present specification, the first electrode includes the current collector and the electrode active material layer provided on one surface or two opposite surfaces of the current collector. The non-coated portion (hereinafter, referred to as a 'first non-coated portion') of the first electrode, which does not have the electrode active material layer, is present at a long side end in a winding direction of the current collector provided at one end of the winding axis of the electrode assembly. The first non-coated portion is provided at an upper side in a height direction (a direction parallel to a Z-axis) of the electrode assembly accommodated in the battery can. That is, the current collector includes the non-coated portion of the first electrode disposed at the long side end thereof and exposed to the outside of the separator, and the non-coated portion of the first electrode is not coated with the electrode active material.

In the embodiment of the present specification, the second electrode includes a second electrode current collector and a second electrode active material layer provided on one surface or two opposite surfaces of the second electrode current collector. The non-coated portion (hereinafter, referred to as a 'second non-coated portion') of the second electrode is present at the other side end in a width direction (a direction parallel to the Z-axis) of the second electrode current collector, and the non-coated portion of the second electrode does not include the second electrode active material layer.

The non-coated portion of the second electrode is provided at a lower side in the height direction (direction parallel to the Z-axis) of the electrode assembly accommodated in the battery can. That is, the second electrode current collector includes a second non-coated portion disposed at the long side end thereof and exposed to the outside of the separator, and the second non-coated portion is not coated with the electrode active material layer. At least a part of the second non-coated portion itself may be used as the electrode tab. For example, the second non-coated portion may be a negative electrode tab.

In the embodiment of the present specification, the electrode assembly may have a target welding region which is a region in which the number of superimposed layers of the segmental piece of the non-coated portion of the second electrode is uniformly maintained in a radial direction of the electrode assembly.

The number of superimposed layers is maximally maintained in this region. Therefore, the second current collecting plate to be described below and the non-coated portion of the second electrode may be welded in this region. In the case in which the laser welding is applied and an output of the laser is increased to improve welding quality, this configuration may prevent the laser beam from penetrating the non-coated portion of the second electrode and damaging the electrode assembly. In addition, it is possible to effectively prevent foreign substances such as welding spatters from entering the electrode assembly.

In the embodiment of the present specification, the first and second non-coated portions extend in opposite directions in the height direction of the secondary battery (the direction parallel to the Z-axis). The first non-coated portion extends toward a closed portion of the battery can, and the second non-coated portion extends toward an opened portion of the battery can.

In the embodiment of the present specification, the first electrode may be a negative electrode, and the second electrode may be a positive electrode.

In the embodiment of the present specification, the first electrode may be a positive electrode, and the second electrode may be a negative electrode.

In the embodiment of the present specification, any active material publicly known in the art may be used, without limitation, as the positive electrode active material applied onto the positive electrode and the negative electrode active material applied onto the negative electrode.

As an example, the positive electrode active material may include an alkaline metal compound expressed by a general chemical formula A[AₓM_{y}]O₂+z (A includes one or more elements among Li, Na, and K, M includes one or more elements selected from Ni, Co, Mn, Ca, Mg, Al, Ti, Si, Fe, Mo, V, Zr, Zn, Cu, Al, Mo, Sc, Zr, Ru, and Cr, x ≥ 0, 1 ≤ x+y ≤2, and -0.1 ≤ z ≤ 2 in which stoichiometric coefficients x, y, and z are selected so that the compound is kept neutral electrically).

As another example, the positive electrode active material may be an alkaline metal compound xLiM¹O₂₋(1-x)Li₂M₂O₃ (M¹ includes one or more elements having average oxidation state 3, M² includes one or more elements having average oxidation state 4, and 0≤x≤1) disclosed in US 6,677,082, US 6,680,143, and the like.

As still another example, the positive electrode active material may be lithium metal phosphate expressed by a general chemical formula LiₐM¹ₓFe₁₋ₓM²_{y}P_{1-y}M³_{z}O_{4-z} (M¹ includes one or more elements selected from Ti, Si, Mn, Co, Fe, V, Cr, Mo, Ni, Nd, Al, Mg, and Al, M² includes one or more elements selected from Ti, Si, Mn, Co, Fe, V, Cr, Mo, Ni, Nd, Al, Mg, Al, As, Sb, Si, Ge, V, and S, M³ includes halogen family elements selectively including F, 0 < a ≤ 2, 0 ≤ x ≤ 1, 0 ≤ y < 1, and 0 ≤ z < 1 in which stoichiometric coefficients a, x, y, and z are selected so that the compound is kept neutral electrically) or Li₃M₂(PO₄)₃ (M includes one or more elements selected from Ti, Si, Mn, Fe, Co, V, Cr, Mo, Ni, Al, Mg, and Al).

In particular, the positive electrode active material may include primary particles and/or secondary particles in which the primary particles are agglomerated.

As an example, carbon materials, lithium metal or lithium metal compound, silicon or silicon compound, tin or tin compound, and the like may be used as the negative electrode active material. A metal oxide such as TiO₂ and SnO₂ having electric potential of less than 2 V may also be used as the negative electrode active material. Both low-crystalline carbon and/or high-crystalline carbon may be used as the carbon material.

In the embodiment of the present specification, a porous polymer film, for example, a porous polymer film made of polyolefin-based polymer such as ethylene homopolymer, propylene homopolymer, ethylene/butene copolymer, ethylene/hexene copolymer, or ethylene/methacrylate copolymer may be used singly as the separator or a stack of the porous polymer films may be used as the separator. As another example, a typical porous non-woven fabric, for example, a non-woven fabric made of high-melting point fiberglass, polyethylene terephthalate fiber, or the like may be used as the separator.

At least one surface of the separator may include a coating layer containing inorganic particles. In addition, the separator itself may be a coating layer containing inorganic particles. The particles constituting the coating layer may be coupled by a binder so that an interstitial volume is present between the adjacent particles.

The inorganic particles may be made of inorganic substance with permittivity of 5 or more. As a non-restrictive example, the inorganic particle may include one or more substances selected from a group consisting of Pb(Zr,Ti)O₃(PZT), Pb₁₋ₓLaₓZr_{1-y}Ti_{y}O₃(PLZT), PB(Mg₃Nb_{2/3})O₃-PbTiO₃(PMN-PT), BaTiO₃, hafnia(HfO₂), SrTiO₃, TiO₂, Al₂O₃, ZrO₂, SnO₂, CeO₂, MgO, CaO, ZnO, and Y₂O₃.

The electrolyte may be a salt having a structure such as A⁺B⁻. In this case, A⁺ includes ions including alkaline metal cations such as Li⁺, Na⁺, and K⁺ or a combination thereof. Further, B- includes one or more anions selected from a group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ , and (CF₃CF₂SO₂)₂N⁻.

In addition, the electrolyte may be dissolved in an organic solvent and used. Propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof may be used as the organic solvent.

The secondary battery according to the present specification may further include the battery can configured to accommodate the electrode assembly and including an opening portion; the cap plate configured to seal the opening portion of the battery can; and the electrode terminal welded and coupled to the first welding portion of the current collecting plate and coupled to the battery can by riveting.

The secondary battery according to the embodiment of the present specification includes a cylindrical battery can 51 configured to accommodate an electrode assembly 71 and electrically connected to a non-coated portion 72 of a second electrode. In particular, the battery can 51 is opened at one side (the lower side). In addition, a bottom 52 of the battery can 51 has a structure in which an electrode terminal 50 is riveted into a through-hole 53 through a caulking process.

In the embodiment of the present specification, the secondary battery may include a gasket interposed between the electrode terminal and the through-hole.

The secondary battery 70 according to the embodiment of the present specification may include a sealing body 74 configured to seal an opening end of the battery can 51 so as to be insulated from the battery can 51. In particular, the sealing body 74 may include a cap plate 74a having no polarity, and a sealing gasket 74b interposed between an edge of the cap plate 74a and the opening end of the battery can 51.

In the present specification, the cap plate 74a may be made of a conductive metallic material such as aluminum, steel, or nickel. In addition, the sealing gasket 74b may be made of polypropylene, polybutylene terephthalate, polyfluorinated ethylene, or the like having insulation and elasticity. However, the present invention is not limited by the material of the cap plate 74a and the material of the sealing gasket 74b.

In the embodiment of the present specification, the cap plate 74a may include a vent notch 77 that bursts when a pressure in the battery can 51 exceeds a critical value. The vent notches 77 may be formed at two opposite surfaces of the cap plate 74a. The vent notch 77 may be formed in the surface of the cap plate 74a while having a continuous or discontinuous circular pattern, a straight pattern, or other patterns.

In the embodiment of the present specification, the battery can 51 may include a crimping portion 75 extending and bent toward the inside of the battery can 51 and configured to surround and fix the edge of the cap plate 74a together with the sealing gasket 74b in order to fix the sealing body 74.

In the embodiment of the present specification, the battery can 51 may also include a beading portion 76 press-fitted into the battery can 51 in a region adjacent to the opening end. The beading portion 76 supports an edge of the sealing body 74, particularly, an outer periphery surface of the sealing gasket 74b when the sealing body 74 is fixed by the crimping portion 75.

In the embodiment of the present specification, the electrode terminal may be made of a metallic material having conductivity. The electrode terminal may be made of aluminum (Al).

In the embodiment of the present specification, the secondary battery may further include a second current collecting plate 78 welded to the non-coated portion 72 of the second electrode. The second current collecting plate 78 is made of a conductive metallic material such as aluminum, steel, or nickel.

In the embodiment of the present specification, at least a part 78a of an edge of the second current collecting plate 78, which is not in contact with the non-coated portion 72 of the second electrode, may be interposed between the beading portion 76 and the sealing gasket 74b and fixed by the crimping portion 75.

Selectively, at least a part 78a of the edge of the second current collecting plate 78 may be fixed, by welding, to an inner peripheral surface 76a of the beading portion 76 adjacent to the crimping portion 75.

In the embodiment of the present specification, an insulator may be provided between the current collecting plate and an inner surface of the battery can. The insulator prevents the contact between the current collecting plate and the battery can. The insulator may also be interposed between an upper end of the outer peripheral surface of the electrode assembly and the inner surface of the battery can. That is, the insulator may also be interposed between the non-coated portion of the first electrode and an inner surface of a sidewall portion of the battery can. This is to prevent the contact between the inner peripheral surface of the battery can and the non-coated portion of the first electrode extending toward the closed portion of the battery can.

In the embodiment of the present specification, the non-coated portions 72 and 73 of the first electrode and/or the second electrode are bent from the outer periphery toward the core of the electrode assembly 71, such that the bent surfaces may be formed at the upper and lower sides of the electrode assembly 71. In addition, the second current collecting plate 78 may be welded to the bent surface formed by bending the non-coated portion 72 of the second electrode, and the first current collecting plate 79 may be welded to the bent surface formed by bending the non-coated portion 73 of the first electrode.

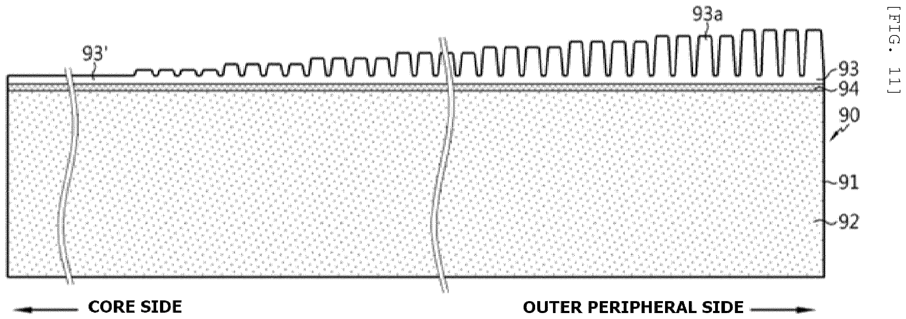

To mitigate stress occurring at the time of bending the non-coated portions 72 and 73, the first electrode and/or the second electrode may have the improved structure different from the structure of the electrode illustrated in FIG. 1. FIG. 11 is a top plan view exemplarily illustrating a structure of an electrode 90 according to the exemplary embodiment of the present invention.

Referring to FIG. 11, the electrode 90 includes the current collector 91 having a sheet shape and provided in the form of a foil made of a conductive material, the active material layer 92 formed on at least one surface of the current collector 91, and the non-coated portion 93 disposed at a long side end of the current collector 91, and the non-coated portion 93 is not coated with an active material.

In particular, the non-coated portion 93 may include a plurality of notched segmental pieces 93a. The plurality of segmental pieces 93a constitutes a plurality of groups, and the segmental pieces 93a included in each of the groups may have the same height (length in a Y direction), and/or the same width (length in a Z direction), and/or the same spacing pitch. The number of segmental pieces 93a included in each of the groups may further increase or decrease than illustrated. The segmental piece 93a may have a trapezoidal shape and be modified in a quadrangular, parallelogrammatic, semi-circular, or semi-elliptical shape. In particular, the height of the segmental piece 93a may increase in a stepwise manner in the direction from the core to the outer periphery. In addition, a core side non-coated portion 93' disposed adjacent to the core may not include the segmental piece 93a, and the core side non-coated portion 93' may have a smaller height than other non-coated portion regions.

In the embodiment of the present specification, the electrode 90 may include an insulating coating layer 94 configured to cover a boundary between the active material layer 92 and the non-coated portion 93. The insulating coating layer 94 contains polymer resin with insulation and may further selectively include an inorganic filler. The insulating coating layer 94 serves to prevent an end of the active material layer 92 from coming into contact with an active material layer having an opposite polarity and facing the active material layer 92 through the separator. The insulating coating layer 94 serves to structurally support the bent portion of the segmental piece 93a. To this end, at least a part of the insulating coating layer 94 may be exposed to the outside from the separator when the electrode 90 is wound as the electrode assembly.

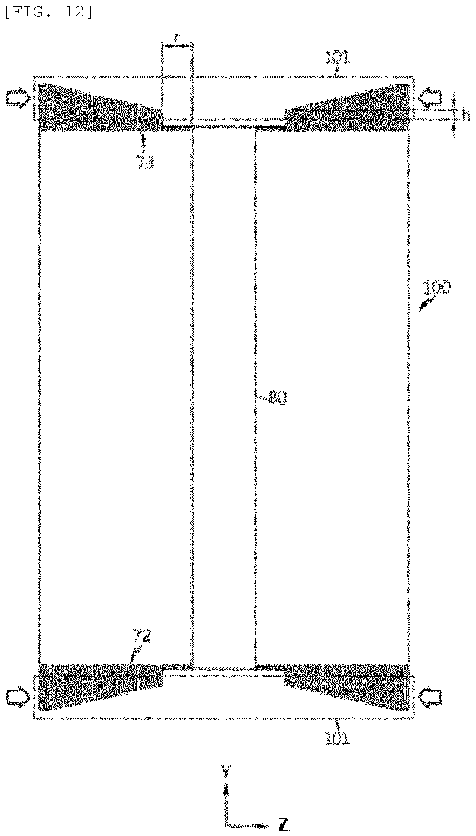

FIG. 12 is a cross-sectional view taken in the longitudinal direction Y and illustrating the electrode assembly 100 according to the embodiment of the present invention in which a segmental structure of the non-coated portion of the electrode 90 is applied to first and second electrodes.

Referring to FIG. 12, the electrode assembly 100 may be manufactured by the winding method described with reference to FIG. 2. For the convenience of description, the protruding structure of the non-coated portions 72 and 73 extending to the outside of the separator is illustrated in detail, but the illustration of the structure in which the first electrode, the second electrode, and the separator are wound will be omitted. The non-coated portion 72 protruding downward extends from the first electrode, and the non-coated portion 73 protruding upward extends from the second electrode. The pattern in which heights of the non-coated portions 72 and 73 are changed is schematically illustrated.

That is, the heights of the non-coated portions 72 and 73 may be irregularly changed depending on positions at which cross-sections are formed. For example, when a side portion of the trapezoidal segmental piece 93a is cut, a height of the non-coated portion is smaller than a height of the segmental piece 93a in a cross-sectional view. Therefore, it should be understood that the heights of the non-coated portions 72 and 73 illustrated in the drawing illustrating a cross-section of the electrode assembly 100 correspond to an average height of the non-coated portion included in the respective winding turns.

As illustrated in FIG. 12, the non-coated portions 72 and 73 may be bent toward the core from the outer periphery of the electrode assembly 100. FIG. 12 illustrates bent parts 101 indicated by boxed with dash-dotted lines. When the non-coated portions 72 and 73 are bent, the segmental pieces radially adjacent to one another are superimposed in multiple layers, such that bent surfaces 102 are formed at upper and lower portions of the electrode assembly 100. In this case, the core side non-coated portion (93' in FIG. 11) has a small height and thus is not bent. A height h of the segmental piece, which is bent at the innermost side, is equal to or smaller than a radial length r of a winding region formed by the core side non-coated portion 93' having no segmental piece structure. Therefore, a cavity 80 positioned at the core of the electrode assembly 100 is not closed by the bent segmental pieces. When the cavity 80 is not closed, there is no difficulty in the process of injecting the electrolyte, and efficiency in injecting the electrolyte is improved.

The cap plate 74a of the sealing body 74 of the secondary battery 70 according to the embodiment of the present invention has no polarity. Instead, the second current collecting plate 78 is connected to the sidewall of the battery can 51, such that the outer surface 52a of the bottom 52 of the battery can 51 has a polarity opposite to the polarity of the electrode terminal 50. Therefore, wiring, such as busbar connection, may be performed above the secondary battery 70 by using the electrode terminal 50 and the outer surface 52a of the bottom 52 of the battery can 51 at the time of connecting a plurality of cells in series and/or parallel. Therefore, it is possible to increase the number of cells to be mounted in the same space and increase energy density.

In the embodiment of the present specification, the secondary battery may include the electrode terminal riveted to the bottom of the battery can.

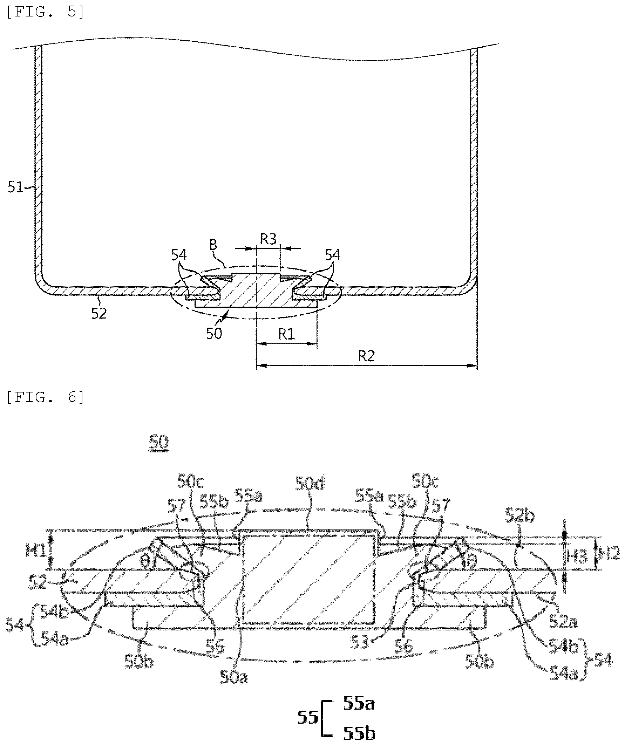

FIG. 5 is a cross-sectional view illustrating a riveting structure of the electrode terminal 50 according to the embodiment of the present invention, and FIG. 6 is an enlarged cross-sectional view of a part indicated by the dotted circle.

Referring to FIGS. 5 and 6, the riveting structure of the electrode terminal 50 according to the embodiment may include the cylindrical battery can 51 opened at one side thereof, the electrode terminal 50 riveted through the through-hole 53 formed in the bottom 52 of the battery can 51, and a riveting gasket 54 interposed between the electrode terminal 50 and the through-hole 53.

The battery can 51 may be made of a conductive metallic material. For example, the battery can 51 may be made of steel, but the present invention is not limited thereto.

The electrode terminal 50 is made of a conductive metallic material. For example, the electrode terminal 50 may be made of aluminum, but the present invention is not limited thereto.

In the embodiment of the present specification, the riveting gasket 54 may be made of polymer resin having insulation and elasticity. For example, the riveting gasket 54 may be made of polypropylene, polybutylene terephthalate, polyfluorinated ethylene, or the like, but the present invention is not limited thereto.

In the embodiment of the present specification, the electrode terminal 50 may include: a body portion 50a inserted into the through-hole 53; an outer flange portion 50b extending along an outer surface 52a from a periphery of one side of the body portion 50a exposed through the outer surface 52a of the bottom 52 of the battery can 51; an inner flange portion 50c extending toward an inner surface 52b from a periphery of the other side of the body portion 50a exposed through the inner surface 52b of the bottom 52 of the battery can 51; and a flat portion 50d provided inside the inner flange portion 50c.

In particular, the flat portion 50d may be parallel to the inner surface 52b of the bottom 52 of the battery can 51. In this case, the term 'parallel' means being substantially parallel when observed with the naked eye.

According to one aspect, an angle θ between the inner flange portion 50c and the inner surface 52b of the bottom 52 of the battery can 51 may be 0 to 60 degrees. The magnitude of the angle is determined depending on caulking strength in a case in which the electrode terminal 50 is installed in the through-hole 53 of the battery can 51 through a caulking process. For example, the angle Θ may decrease to 0 degree as the caulking strength increases. If the angle exceeds 60 degrees, the sealing effect of the riveting gasket 54 may deteriorate.

In the embodiment of the present specification, a recessed portion 55 may be provided between the inner flange portion 50c and the flat portion 50d. The recessed portion 55 may have a cross-sectional structure of an asymmetric groove. For example, the asymmetric groove may have an approximately V shape. The asymmetric groove may include a sidewall 55a of the flat portion 50d, and an inclined surface 55b of the inner flange portion 50c connected to an end of the sidewall 55a. The sidewall 55a may be substantially perpendicular to the inner surface 52b of the bottom 52 of the battery can 51. The term 'perpendicular' means being substantially perpendicular when observed with the naked eye. The recessed portion 55 is made by a shape of a caulking jig when the electrode terminal 50 is installed in the through-hole 53 of the battery can 51 through the caulking process. In particular, a thickness of the inner flange portion 50c may decrease as a distance from the body portion 50a of the electrode terminal 50 increases.

In the embodiment of the present specification, the riveting gasket 54 may include: an outer gasket 54a interposed between the outer flange portion 50b and the outer surface 52a of the bottom 52 of the battery can 51; and an inner gasket 54b interposed between the inner flange portion 50c and the inner surface 52b of the bottom 52 of the battery can 51.

The thickness of the outer gasket 54a and the thickness of the inner gasket 54b may vary depending on positions thereof. In particular, a region of the inner gasket 54b, which is interposed between the inner flange portion 50c and the inner edge 56 of the through-hole 53 connected to the inner surface 52b of the bottom 52 of the battery can 51 may have a relatively small thickness. In particular, there may be a minimum thickness point in the gasket region interposed between the inner flange portion 50c and the inner edge 56 of the through-hole 53. In addition, the inner edge 56 of the through-hole 53 may include a facing surface 57 facing the inner flange portion 50c.

Meanwhile, upper and lower ends of the inner wall of the through-hole 53 perpendicular to the bottom 52 of the battery can 51 are chamfered (corner-cutting) to form tapered surfaces toward the electrode terminal 50. However, the upper end and/or the lower end of the inner wall of the through-hole 53 may be modified to a soft curved surface having a curvature. In this case, it is possible to further mitigate stress applied to the gasket 54 at the periphery of the upper end and/or the lower end of the inner wall of the through-hole 53.

In particular, the inner gasket 54b may extend to be longer than the inner flange portion 50c while defining an angle of 0 to 60 degrees with the inner surface 52b of the bottom 52 of the battery can 51.

As another example, based on the inner surface 52b of the bottom 52 of the battery can 51, a height H1 of the flat portion 50d may be equal to or larger than a height H2 of an end of the inner gasket 54b.

In addition, based on the inner surface 52b of the bottom 52 of the battery can 51, the height H1 of the flat portion 50d may be equal to or larger than a height H3 of an end of the inner flange portion 50c. When the height parameters H1, H2, and H3 satisfy the condition, it is possible to prevent the inner flange portion 50c and the inner gasket 54b from interfering with another component.

In the embodiment of the present specification, a radius R1 from a center of the body portion 50a of the electrode terminal 50 to an edge of the outer flange portion 50b may be 10 to 60% of a radius R2 of the bottom 52 of the battery can 51.

As R1 decreases, a welding space becomes insufficient at the time of welding an electric wiring component (busbar) to the electrode terminal 50. In addition, when the R1 increases, a welding space decreases at the time of welding the electric wiring component (busbar) to the outer surface 52a of the bottom 52 of the battery can 51 except for the electrode terminal 50. The welding space for the electrode terminal 50 and the outer surface of the bottom 52 of the battery can 51 may be appropriately ensured by adjusting a ratio R1/R2 between 10 and 60%.

In the embodiment of the present specification, a radius R3 from the center of the body portion 50a of the electrode terminal 50 to an edge of the flat portion 50d may be 4 to 30% of the radius R2 of the bottom 52 of the battery can 51. As R3 decreases, a welding space becomes insufficient at the time of welding the current collecting plate (see 79 in FIG. 7) to the flat portion 50d of the electrode terminal 50, and a welding area of the electrode terminal 50 decreases, which may increase contact resistance. In addition, R3 needs to be smaller than R1. When R3 increases, the thickness of the inner flange portion 50c decreases, and a force of the inner flange portion 50c compressing the riveting gasket 54 decreases, which degrades the sealing ability of the riveting gasket 54.

When R3/R2 is adjusted between 4 and 30%, the welding area of the current collecting plate (79 in FIG. 7) and the flat portion 50d of the electrode terminal 50 may be sufficiently ensured. Therefore, the welding process may be easily performed, the contact resistance of the welding region may be reduced, and the degradation of the sealing ability of the riveting gasket 54 may be prevented.

According to the embodiment of the present specification, the current collecting plate and the flat portion 50d of the electrode terminal 50 may be electrically connected. Specifically, the current collecting plate and the flat portion 50d may be directly connected by a welding process or electrically connected by means of an electrode tab, a lead, or the like. In this case, the welding process is not limited as long as the welding process is a method typically performed in the art.

According to the embodiment of the present invention, the riveting structure of the electrode terminal 50 may be formed by a caulking jig configured to move upward and downward. First, a preform (not illustrated) of the electrode terminal 50 is inserted by interposing the riveting gasket 54 into the through-hole 53 formed in the bottom 52 of the battery can 51. The preform refers to an electrode terminal before being riveted.

Next, the caulking jig is inserted into an internal space of the battery can 51. The caulking jig has a groove and a protrusion corresponding to a final shape of the electrode terminal 50 and formed on a surface facing the preform in order to form the electrode terminal 50 by riveting the preform.

Next, the caulking jig is moved downward, and pressing forming is performed on an upper portion of the preform, such that the preform is deformed to the riveted electrode terminal 50.

During the process of pressing the preform with the caulking jig, the outer gasket 54a interposed between the outer flange portion 50b and the outer surface 52a of the bottom 52 of the battery can 51 is elastically compressed, and a thickness of the outer gasket 54a is reduced. In addition, a portion of the inner gasket 54b interposed between the preform and the inner edge 56 of the through-hole 53 is elastically compressed by the inner flange portion 50c and has a smaller thickness than other regions. In particular, a region in which the thickness of the inner gasket 54b is concentratedly reduced is indicated by the dotted circle in FIG. 6. Therefore, sealing performance and sealability between the battery can 51 and the riveted electrode terminal 50 are remarkably improved.

In particular, the riveting gasket 54 may be sufficiently compressed to ensure desired sealing strength without being physically damaged during the process of riveting the preform.

For example, in a case in which the riveting gasket 54 is made of polybutylene terephthalate, compressibility of the riveting gasket 54 may be 50% or more at a point at which the riveting gasket 54 is compressed to a minimum thickness. The compressibility is a ratio of change in thickness between before and after compression with respect to the thickness before compression. As another example, in a case in which the riveting gasket 54 is made of polyfluoroethylene, compressibility of the riveting gasket 54 may be 60% or more at the point at which the riveting gasket 54 is compressed to the minimum thickness.

As another example, in a case in which the riveting gasket 54 is made of polypropylene, compressibility of the riveting gasket 54 may be 60% or more at the point at which the riveting gasket 54 is compressed to the minimum thickness.

In particular, pressing forming may be performed in a stepwise manner on an upper portion of the preform by moving the caulking jig upward and downward at least twice. That is, the preform may be deformed multiple times by the pressing forming performed in a stepwise manner. In this case, a pressure applied to the caulking jig may increase in a stepwise manner. The stress applied to the preform is dispersed multiple times, which makes it possible to prevent damage to the riveting gasket 54 during the caulking process. In particular, the damage to the gasket is minimized when the portion of the inner gasket 54b interposed between the preform and the inner edge 56 of the through-hole 53 is concentratedly compressed by the inner flange portion 50c.

When the pressing forming of the preform using the caulking jig is completed and then the caulking jig is separated from the battery can 51, the riveting structure of the electrode terminal 50 according to the embodiment of the present invention may be obtained, as illustrated in FIG. 6.

According to the embodiment, the caulking jig performs the pressing forming on the upper portion of the preform while moving upward and downward in the battery can 51. In some instances, a rotary jig used in the related art may be used to perform the pressing forming on the preform.

However, the rotary jig rotates in a state of being inclined at a predetermined angle with respect to a center axis of the battery can 51. Therefore, the rotary jig having a large rotation radius may interfere with an inner wall of the battery can 51. In addition, as a depth of the battery can 51 increases, a length of the rotary jig also increases to that extent. In this case, as a rotation radius of the rotary jig end increases, the pressing forming may not be properly performed on the preform.

The pressing forming using the caulking jig is more effective than the method using the rotary jig.

The riveting structure of the electrode terminal 50 according to the embodiment of the present invention may be applied to the cylindrical secondary battery.

In the embodiment of the present specification, the secondary battery may be a cylindrical secondary battery having a ratio of a form factor larger than 0.4 (the ratio of the form factor is defined as a value made by dividing a diameter of the cylindrical battery by a height of the cylindrical battery, i.e., a ratio of a diameter Φ to a height H). In this case, the form factor means a value indicating the diameter and the height of the cylindrical secondary battery.

In the related art, batteries having the ratio of the form factor of approximately 0.4 or less are used. That is, in the related art, 18650 cell, 21700 cell, and the like are used, for example. In the case of 18650 cell, a diameter thereof is approximately 18 mm, a height thereof is approximately 65 mm, and a ratio of the form factor thereof is approximately 0.277. In the case of 21700 cell, a diameter thereof is approximately 21 mm, a height thereof is approximately 70 mm, and a ratio of the form factor thereof is approximately 0.300.

The cylindrical secondary battery according to the embodiment of the present specification may be 46110 cell, 48750 cell, 48110 cell, 48800 cell, or 46800 cell. In the numerical value indicating the form factor, the first two numbers indicate a diameter of the cell, the next two numbers indicate a height of the cell, and the final number 0 indicates that a cross-section of the cell is circular.

The secondary battery according to the embodiment of the present specification may be a cylindrical secondary battery that is a cylindrical cell and has a diameter of 46 mm, a height of 110 mm, and a ratio of the form factor of 0.418.

The secondary battery according to the embodiment of the present specification may be a cylindrical secondary battery that is a cylindrical cell and has a diameter of 48 mm, a height of 75 mm, and a ratio of the form factor of 0.640.

The secondary battery according to the embodiment of the present specification may be a cylindrical secondary battery that is a cylindrical cell and has a diameter of 48 mm, a height of 110 mm, and a ratio of the form factor of 0.418.

The secondary battery according to the embodiment of the present specification may be a cylindrical secondary battery that is a cylindrical cell and has a diameter of 48 mm, a height of 80 mm, and a ratio of the form factor of 0.600.

The secondary battery according to the embodiment of the present specification may be a cylindrical secondary battery that is a cylindrical cell and has a diameter of 46 mm, a height of 80 mm, and a ratio of the form factor of 0.575.

The present specification provides: the electrode assembly 71, A, or 100 in which the first electrode 10, the separator 12, and the second electrode 11 are stacked and wound, the first electrode 10 including the first electrode current collector (not illustrated) and the electrode active material layer (not illustrated) provided on the first electrode current collector (not illustrated), in which the long side end of the first electrode current collector based on the winding direction includes the non-coated portion 10a of the first electrode 10 that does not have the electrode active material layer; the battery can 41 or 51 configured to accommodate the electrode assembly 71, A, or 100 and including the opening portion; the cap plate 41 or 51 configured to seal the opening portion of the battery can 41 or 51; and the current collecting plate 400 configured to be applied to the secondary battery 40 or 70 including the electrode terminal 50 riveted to the battery can 41 or 51, the current collecting plate 400 being provided at one end of the electrode assembly 71, A, or 100 at which the non-coated portion 10a of the first electrode 10 is exposed and including the central portion 410 corresponding to the core 340 of the electrode assembly 71, A, or 100, in which the central portion 410 includes the first welding portion 411 having a thickness smaller than a thickness of the remaining portion of the current collecting plate 400. The components of the current collecting plate 400 are identical to the components described above.

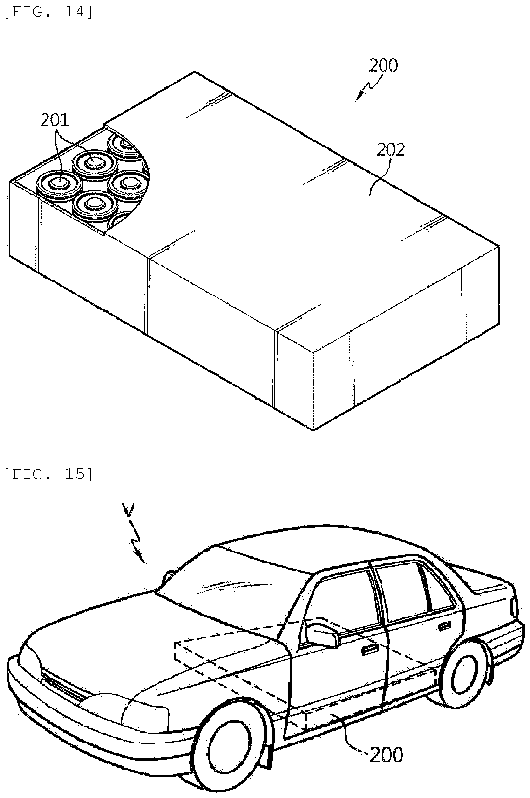

The secondary battery 40 or 70 according to the embodiment of the present specification may be used to manufacture a battery pack 200. FIG. 14 is a view schematically illustrating a configuration of the battery pack 200 according to the embodiment of the present invention.

Referring to FIG. 14, a battery pack 200 according to the embodiment of the present invention includes an assembly to which a secondary battery cell 201 is electrically connected, and a pack housing 202 configured to accommodate the assembly. The cylindrical secondary battery cell 201 is the battery cell according to the above-mentioned embodiment. For convenience of illustration, components such as busbars for electrical connection between the cylindrical secondary battery cells 201, a cooling unit, and an external terminal are omitted from the drawings.

The battery pack 200 may be mounted on a vehicle. For example, the vehicle may be an electric vehicle, a hybrid vehicle, or a plug-in hybrid vehicle. The vehicle may be a four-wheel vehicle or a two-wheel vehicle. FIG. 15 is a view for explaining a vehicle including the battery pack 200 illustrated in FIG. 14.

Referring to FIG. 15, a vehicle V according to the embodiment of the present specification includes the battery pack 200 according to the embodiment of the present specification. The vehicle V operates by receiving electric power from the battery pack 200 according to the embodiment of the present invention.

The present invention has been described with reference to the limited embodiments and the drawings, but the present invention is not limited thereto. The described embodiments may be changed or modified by those skilled in the art to which the present invention pertains within the technical spirit of the present invention and within the scope equivalent to the appended claims.

## Claims

1. A secondary battery comprising:
an electrode assembly in which first and second electrodes and a separator provided between the first and second electrodes are wound, the first and second electrodes each comprising a non-coated portion of the first electrode disposed at a long side end thereof, exposed to the outside of the separator, and having no active material applied thereonto; and
a current collecting plate provided at one end of the electrode assembly at which the non-coated portion of the first electrode is exposed, the current collecting plate comprising a central portion corresponding to a core of the electrode assembly,
wherein the central portion comprises a first welding portion having a thickness smaller than a thickness of the remaining portion of the current collecting plate.

2. The secondary battery of claim 1, wherein the current collecting plate further comprises two or more legs each having one end connected to the central portion and extending from the central portion in an outer peripheral direction of the electrode assembly, and the leg comprises a second welding portion having a thickness smaller than a thickness of the remaining portion of the current collecting plate except for the first welding portion.

3. The secondary battery of claim 1, wherein the first welding portion has a structure having a thickness that gradually decreases in a direction from outside to inside the first welding portion.

4. The secondary battery of claim 1, wherein a ratio between an average thickness of the first welding portion and a thickness of the current collecting plate except for the first welding portion is 0.4:1 to 0.9:1.

5. The secondary battery of claim 1, wherein an average thickness of the first welding portion is 0.05 cm or more and 0.5 cm or less.

6. The secondary battery of claim 2, wherein a ratio between an average thickness of the second welding portion and a thickness of the current collecting plate except for the first and second welding portions is 0.4:1 to 0.9:1.

7. The secondary battery of claim 2, wherein an average thickness of the second welding portion is 0.05 cm or more and 0.5 cm or less.

8. The secondary battery of claim 2, wherein the second welding portions respectively included in the two or more legs have the same area.

9. The secondary battery of claim 1, wherein the current collecting plate further comprises four legs having one end connected to the central portion and extending from the central portion in an outer peripheral direction of the electrode assembly, and the four legs are positioned to be spaced apart from one another in a winding direction of the electrode assembly.

10. The secondary battery of claim 1, wherein the first welding portion is positioned to be spaced apart from an edge of the current collecting plate.

11. The secondary battery of claim 2, wherein the second welding portion is positioned to be spaced apart from an edge of the current collecting plate.

12. The secondary battery of claim 2, wherein the first and second welding portions are positioned to be spaced apart from each other.

13. The secondary battery of claim 1, further comprising:
a battery can configured to accommodate the electrode assembly and comprising an opening portion;
a cap plate configured to seal the opening portion of the battery can; and
an electrode terminal coupled to the first welding portion of the current collecting plate by welding and riveted to the battery can.

14. A current collecting plate , which is applied to a secondary battery comprising: an electrode assembly made by stacking and winding a first electrode, a separator, and a second electrode, the first electrode including a first electrode current collector and an electrode active material layer provided on the first electrode current collector, wherein a non-coated portion of the first electrode, on which the electrode active material layer is not provided, is provided at a long side end based on a winding direction of the current collector; a battery can configured to accommodate the electrode assembly and comprising an opening portion; a cap plate configured to seal the opening portion of the battery can; and an electrode terminal riveted to the battery can,
wherein the current collecting plate is provided at one end of the electrode assembly at which the non-coated portion of the first electrode is exposed,
wherein the current collecting plate comprises a central portion corresponding to a core of the electrode assembly, and
wherein the central portion comprises a first welding portion having a smaller thickness than the remaining portion of the current collecting plate.

15. A battery pack comprising a plurality of secondary batteries according to any one of claims 1 to 13.

16. A vehicle comprising at least one battery pack according to claim 15.
